# EUROPEAN PATENT APPLICATION

(11) **EP 1 288 817 A2**
(43) Date of publication of application: **05.03.2003**
(21) Application number: 02019087.2
(22) Date of filing: 28.08.2002
(51) Int. Cl.: G06F 17/60

(54) **Auction processing**

(30) Priority: 28.08.2001 JP 2001257226; 14.09.2001 JP 2001279328
(71) Applicant: Square Co., Ltd., Meguro-ku, Tokyo 153-8688 (JP)
(72) Inventor: Hora, Masahiro, Meguro-ku, Tokyo 153-8688 (JP)
(74) Representative: Grünecker, Kinkeldey, Stockmair & Schwanhäusser Anwaltssozietät

(57) **Abstract**

An item for use in a game can be easily and appropriately dealt. When an item to be purchased is selected from an auction item list on the screen of the user terminal, and when a bid price which can be paid for the item is determined, the current bid price (old bid price) of the highest bidder is read. The read old bid price is compared with the new bid price, and it is determined whether the new bid price is the highest. If it is the highest price, then the player save data is read, and it is determined whether there is enough money to pay the bid price. If there is enough money to pay the bid price, the amount corresponding to the bid price is subtracted from the player save data.

## Description

### CROSS REFERENCE TO RELATED APPLICATIONS

The present disclosure relates to subject matter contained in Japanese Patent Application No. 2001-257226, filed on August 28, 2001, and Japanese Patent Application No.2001-279328, filed on September 14, 2001, the disclosures of which are expressly incorporated herein by reference in their entireties.

### BACKGROUND OF THE INVENTION

### Field of the Invention

The present invention relates to a server system, an auction processing.

### Description of the Related Art

Recently, there has been an increasing number of video games (online games) operating on a network in which multiple players can simultaneously take part in a game through the network. In the online game, multiple terminals operated by respective players are connected to a game server group through a network, and communications are established between the terminals and the game server group. The game server group includes a server to which multiple video game machines are connected so that players can locate other players to play with. The server can be referred to as a lobby server because it provides a virtual lobby for communications among players.

When a video game machine is connected to the lobby server, a screen showing a virtual 'lobby' is displayed on the display system of the video game machine. On the lobby screen, the character of a player and the characters of other players connected to the lobby server are displayed. The player can have a chat with other players so that they can communicate with one another and locate other players to play with.

When a desired game is selected from the menu displayed on the lobby screen, a video game machine is connected to one of the game servers in the game server group, and the game screen is displayed on the display of the video game machine, thereby starting the game. When the game is over, the save data such as items, for example, a sword, a card, etc., score, the amount of money (money in the game) obtained at the end of the game by a player through a character in the game is stored in the memory of the profile server or the video game machine. Furthermore, when the game is resumed, the game proceeds using the items, scores, the amount of money, etc. stored as the save data. Then, the player can directly exchange his or her own items and money with other players after negotiation.

However, in the conventional online game, a player has to search for another player who will buy an item to be sold, and directly contact the player for exchange, thereby performing a laborious operation.

### SUMMARY OF THE INVENTION

The present invention has been developed to solve the above mentioned problems, and aims at providing the technology of easily and appropriately processing the items to be used in a game.

In order to achieve the above object, according to a first aspect of the invention, there is provided a server system connected to multiple client systems operated by players through a network. The server system executes a game including the players operating the client systems, and performs an auction in which the players auction an item used in the game selling the item using money in the game. The server system includes a storage that stores save data indicating the item and the amount of money owned in the game by each player. The server system further includes a reception system that receives from a player instructions to auction the item or bid in the auction. The server system further includes a data deletion system that deletes data corresponding to the item put up for auction or a price for bidding in the auction from the save data of the player, stored in the storage, based on information received by the reception system. The server system further includes a determination system that determines a result of the auction of the item. The server system further includes a save data update system that updates the stored save data based on the auction result.

Therefore, when a player A auction a desired item by operating a client system, the item is deleted from the save data of the player A in the storage. When players B, C, and D bid for the items put up for auction, the bid price is subtracted from the amount of money of the save data of each of the players B, C, and D. Since the item or the amount of money is subtracted from the save data of the player when the item is put up for auction or a bid is made, an auction transaction can be properly made even when the players play a game using the save data after offering the item or making a bid. For example, when an item and the amount of money are recorded in the save data, there is not the problem that the item and the bid amount are used in a game using the save data, and that no items or the bid amount remain for the auction transaction.

Then, for example, if the bid amount of the player B is the highest and the player B is a successful bidder, the save data update system adds the item to the save data of the player B (delivery). The amount of money corresponding to the highest bid amount is added to the save data of the player A (payment). Then, the amount of money subtracted when a bid is made is added to the save data of the players C and D who are the unsuccessful bidders (repayment). Furthermore, if there are no bidders for the item put up for auction by the player A, then the item put up for auction is returned to the save data of the player A (return).

Therefore, by conducting delivery, payment, repayment, and return as described above, a transaction of an item can be easily and properly performed among players.

The server system further includes a slip information generation system that generates slip information indicating movement of money and/or an item to a player who participates in an auction based on the auction result. The save data update system updates the save data of a corresponding player according to the slip information. Thus, when the slip information is generated, a time when an auction result is updated in the save data can be easily changed. Furthermore, the save data can be updated with the delivery, payment, repayment, and return processes stored respectively as delivery slip information, payment slip information, repayment slip information, and return slip information, thereby correctly reserving updated save data.

The save data update system can update the save data while the game is not executing, the game execution changing the contents of the save data. Thus, for example, although the save data is copied and used in the game, and is reflected at a predetermined timing by the save data, the save data can maintain consistency. That is, when the copied save data is used while a game is conducted and the contents of the save data is changed, the problem that an auction result is reflected in the save data which does not reflect the change in the game can be properly avoided.

The save data update system can update the save data when the save data is requested. In this case, when the save data is possibly changed, an auction result can be reflected by the save data, thereby successfully maintaining the consistency of the save data.

The reception system can receive an instruction to auction an item or a bid in an auction from a player when the save data is not copied and used. In this case, the save data can maintain the consistency. The item put up for auction can be arms, magic, medicines, or a card used in a game.

According to a second aspect of the invention, there is provided an auction processing method for use with a server system connected to multiple client systems operated by players through a network. The server controls a game including the players operating respective client systems, and performs an auction in which the players auction an item used in the game selling the item using money in the game. The auction processing method includes storing save data indicating the item and the amount of money owned in the game by each player. The auction processing method further includes receiving instructions to auction the item or a bid in the auction from the player. The auction processing method further includes deleting data corresponding to the item put up for the auction or a price for bidding in the auction from the save data of a player participating in the auction based on the reception. The auction processing method further includes determining an auction result of the item put up for the auction and updating the stored save data based on the auction result.

The auction processing method further includes generating slip information indicating movement of money and/or an item to a player who participates in an auction based on the auction result. The save data of a corresponding player can be updated in accordance with the slip information.

According to a third aspect of the invention, there is provided a storage medium on which is recorded an auction processing program for causing a computer to control a game including the players operating respective client systems connected through a network, and to perform an auction in which the players auction an item used in the game selling the item using money in the game. The program causes the computer to store save data indicating the item and the amount of money owned in the game by each player. The program further causes the computer to receive an instruction to auction the item or a bid in the auction from the player of the client system. The program further causes the computer to delete data corresponding to the item put up for auction or a price for bidding in the auction from the save data of the participating players based on the reception. The program further causes the computer to determine an auction result of the item put up for auction and to update the save data based on the auction result.

### BRIEF DESCRIPTION OF THE DRAWINGS

FIG. 1 is a block diagram showing a configuration of the online game system according to an embodiment of the present invention;
FIG. 2 is a block diagram showing a configuration of the lobby server according to an embodiment of the present invention;
FIG. 3 is a block diagram showing a connection of each management program according to an embodiment of the present invention;
FIG. 4 is a block diagram showing a tree configuration of each management program according to an embodiment of the present invention;
FIG. 5 is a block diagram showing details of the lobby server according to an embodiment of the present invention;
FIG. 6 is a flowchart showing an operation according to an embodiment of the present invention;
FIG. 7 is a flowchart of an operation subsequent to the processing of FIG. 6;
FIG. 8 is a flowchart of an operation subsequent to the processing of FIG. 7;
FIG. 9 is a flowchart of an operation subsequent to the processing of FIG. 8;
FIG. 10 is a flowchart showing an operation of putting up an item for auction according to an embodiment of the present invention;
FIG. 11 is a flowchart showing an operation of making a bid for auction according to an embodiment of the present invention;
FIG. 12 is a flowchart of an operation subsequent to the processing of FIG. 11; and
FIG. 13 a flowchart showing an operation of successfully making a bid for auction according to an embodiment of the present invention.

### DETAILED DESCRIPTION OF THE PREFERRED EMBODIMENTS

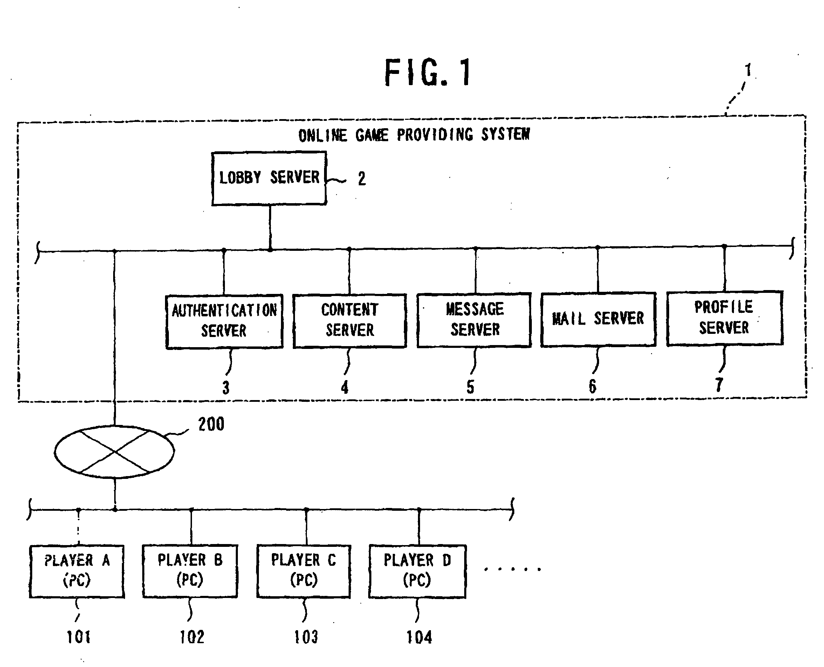

The embodiments of the present invention are described below by referring to the attached drawings. The embodiments are realized by applying the present invention to the online game providing system for presenting players with a match in a game using a server on a network. First, the configuration of the system is explained by referring to FIGS. 1 - 5.

### (System Configuration)

FIG. 1 is a block diagram of the configuration of the system for providing an online game according to an embodiment of the present invention. On a network 200, a online game providing system 1 on the server side, and information terminals 101 - 104 ..., for use by a group of players (players A - D ...) on the client side are connected. The information terminals 101 - 104 can be personal computers (hereinafter referred to as PCs 101 - 104) connected to the network, but the present invention is not limited to this configuration. For example, a client system including the body of a game machine, a TV receiver, an operation controller, or a wireless mobile terminal can be used.

### (Online Game Providing System)

The online game providing system 1 presents players A - D with a place for a match in a predetermined game. The online game providing system 1 comprises a lobby server 2, an authentication server 3, a content server 4, a message server 5, a mail server 6, and a profile server 7.

The authentication server 3 manages the accounts (user IDs) and passwords of players A - D, and also manages the addresses of PCs 101 - 104. The content server 4 provides various information about sports, music, movies, local information, broadcast (TV and radio), etc. The message server 5 provides an environment for exchanging messages in real time among the players A - D. For example, the message server 5 routes (sets a destination and a path) a message for a chat, etc. The mail server 6 provides an environment for exchanging electronic mail among the players A - D. The profile server 7 manages the profile of the players A - D corresponding to accounts. Each of the players A - D registers its own profile in the online game providing system 1 through the PCs 101 - 104.

The database stores ordered data from highest to lowest in a predetermined game.

### (Lobby Server)

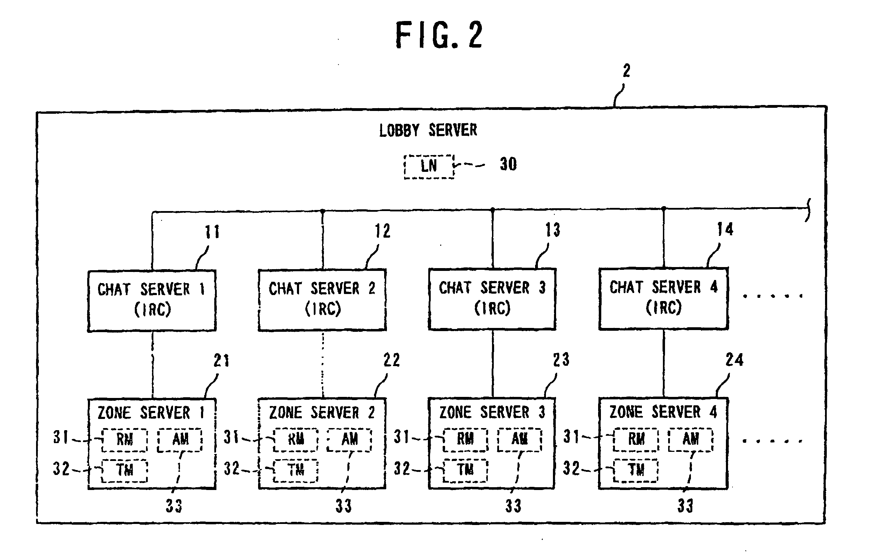

FIG. 2 is a block diagram of the details of the lobby server 2. The lobby server 2 includes multiple chat servers (IRC: Internet Relay Chat) 11 - 14 and a group of zone servers 21 - 24. The lobby server 2 has a management master program including a lobby navigator (LN) 30. The zone servers 21 - 24 respectively includes a management program including a room master (RM) 31, a table master (TM) 32 and an auction master (AM) 33. The IRCs 11 - 14 route messages for transmission and reception among servers.

### (Hierarchical Structure)

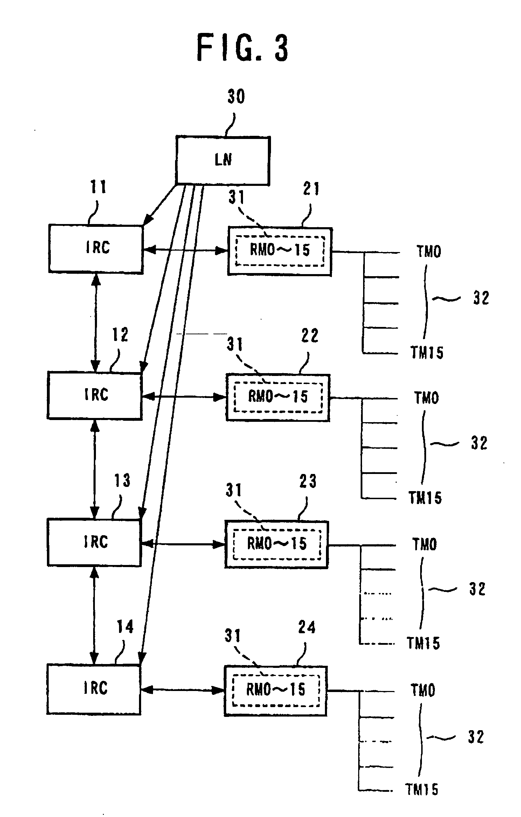

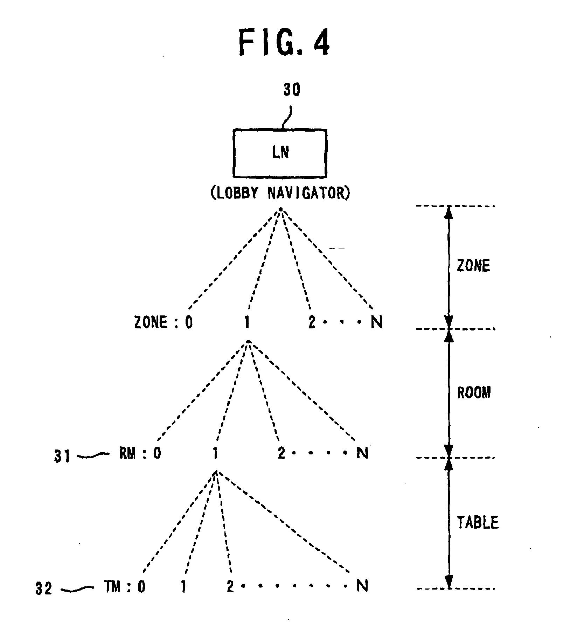

FIGS. 3 and 4 show the hierarchical structure of each management master program (LN 30, RM 31, and TM 32). As shown in FIG. 3, in the lobby server 2, the LN 30 selects a zone server through the IRC 11 - 14. In the zone servers 21 - 24, the RM 31 selects the rooms 0 - 15, and the TM 32 selects the tables 0 - 15. As shown in FIG. 4, each management master program is configured as a parent-child-grandchild tree structure. The LN 30 divides zones into 0 - N. The RM 31 is located below the LN 30, and divides rooms into 0 - N. The TM 32 is located below the RM 31, and divides tables into 0 - N.

### (Various Functions of Lobby Server)

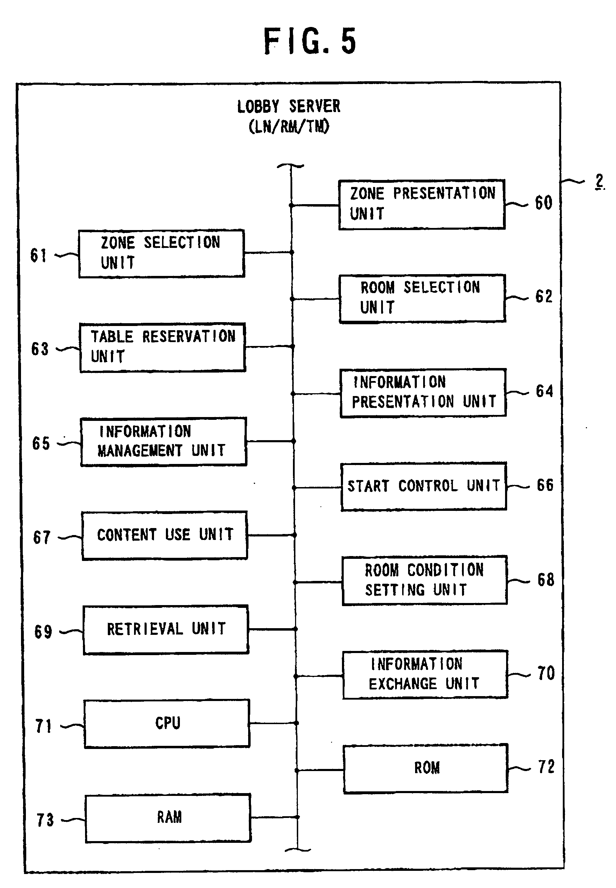

FIG. 5 is a block diagram of various functions provided for the lobby server 2. The lobby server 2 includes a zone presentation unit 60, a zone selection unit 61, a room selection unit 62, a table reservation unit 63, an information presentation unit 64, an information management unit 65, a start control unit 66, a content use unit 67, a room condition setting unit 68, a retrieval unit 69, and an information exchange unit 70. Otherwise, the lobby server 2 is provided with a CPU 71 performing an overall process, a ROM 72 storing each type of control program, and a RAM 73 providing an area in which data is temporarily stored and various arithmetic processes are performed.

The zone presentation unit 60 has the function of presenting a lobby, which is a place for a matching multiple players A - D, after dividing it into a group of play zones depending on the matching conditions. The zone selection unit 61 has the function of selecting a play zone desired by each player from among a group of play zones prepared. The room selection unit 62 has the function of selecting a play room desired by each player from among a group of rooms prepared in the selected play zone. The table reservation unit 63 has the function of reserving a table at which each player participates in a game from among a group of tables prepared for the selected play room.

The information presentation unit 64 has the function of presenting play information including at least the number of participants, a play rule, and player information for each play room or a play table. The information management unit 65 has the function of setting and changing the contents of the presented play information. The start control unit 66 has the function of starting a game when predetermined information in the play information satisfies a play condition. The content use unit 67 has the function of collecting and using content information, other than games, when presenting the play information by the information presentation unit 64. The room condition setting unit 68 has the function of setting a use condition of a play room. The retrieval unit 69 has the function of retrieving other players in each play room. The information exchange unit 70 has the function of exchanging information including at least a chat, a message, and a trade among other players in each play room.

### (Explanation of Operations)

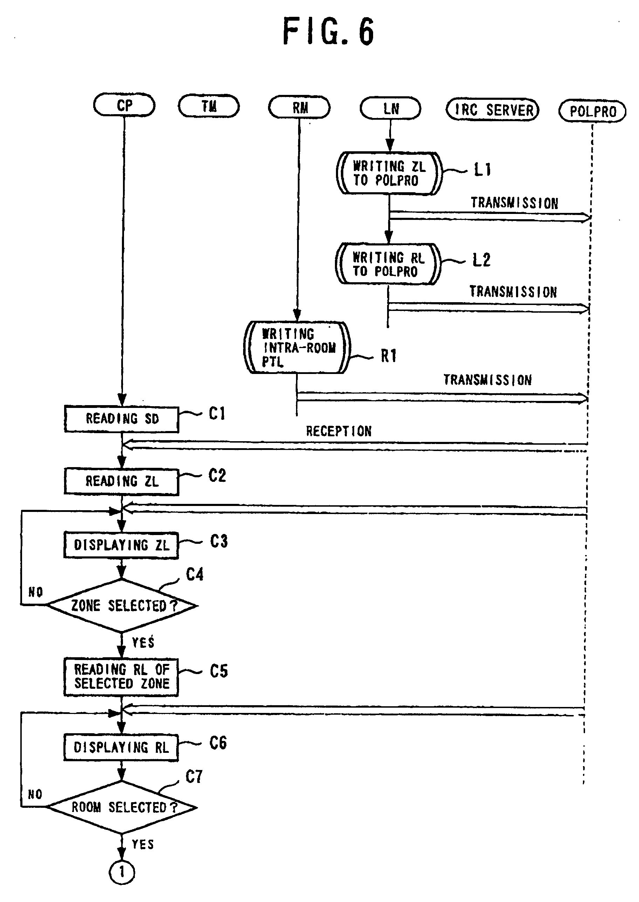

The operations of the embodiments of the present invention with the above mentioned configuration is described below by referring to the flowcharts shown in FIGS. 6 to 9.

A definition is now provided for each symbol, etc. shown in the flowcharts.
CP: client player user terminal (hereinafter referred to simply as a user terminal): The above mentioned information terminals 101 - 104 (PCs 101 - 104).
LN: lobby navigator: The lobby management program uniquely existing in a game, manages a zone and a room.
RM: room master: The room master is a room management program managing the player table in the room.
TM: table master: The table master is a table game management program managing the players and the progress of a game relating to the table.
AM: auction master: The auction master is a program for execution of an auction in which the players of the respective user terminals depending on the execution of the game sell and buy the items owned in the game using the money in the game.
GM: game master is a general name of the program in the server of the LN, RM, and TM for the CP.
POLPRO: file access server which exists in the profile server 7, reserves a user area for each client (including GM and CP), and manages file access among the clients. When files are accessed, access restrictions are placed. A SD (player save data) is stored for each player in the user area.
IRC server: IRC message server: The above mentioned IRC (Internet relay chat) 11 - 14 through which an MSG (message) is transmitted/received among clients (including GM and CP). The management is performed using a unique nickname of each client, and a client specifies a nickname to transmit an MSG to any client.
Channel: In the IRC, each client optionally can belong to a channel. Hereinafter, belonging to the channel will be referred to as "JOIN". In contrast, not belonging to the channel will be referred to as "PART". To clients joining a channel, an MSG can be simultaneously transmitted by specifying a channel name as a destination. To a player being part from a channel, only an MSG can be transmitted with a nickname specified.
Zone: Divides a space in a game for convenience. In this embodiment, since communications are not basically established over multiple zones, the load on a server can be distributed.
Room: Is a child of a zone. There are multiple rooms in a zone for a rule, a level, a purpose, etc. in a game. In a room, an RM for management of the room and a player in the room belong to the same IRC channel, and the player can receive a message addressed to the channel, and a chat using the IRC system can be realized.
Table: Is a child of a room, that is, a grandchild of a zone. A table on which a player enjoys a game with other players using a CP. On the table, a TM managing the table and the player at the table belong to the same IRC channel, and the player can receive an MSG addressed to the channel.
SD: player save data: Intra-game player information storing items such as arms including a sword, etc. magic, medicines, cards, etc., score, money, etc. obtained in a game through a character in the game. The information is stored in the POLPRO user area of the CP, and the user area of the POLPRO.
ZL: zone list: Intra-game zone listing information managed by the LN and stored in the user area of the POLPRO of the LN. Since the number of rooms in each zone, the number of players, etc. are stored, the players can select a zone having a light load.
RL: room list: Intra-zone room listing information for the respective zones in a game managed by the LN and stored in the POLPRO user area of the LN. Since the IRC channel name, the number of tables in the room, and the number of players, etc. are stored, the players can select a zone having a light load.
PTL: Player table list: room player table listing information. Managed by the RM, and periodically stored in a POLPRO user area of the RM. The list stores a nickname status of each player in a room (in the process of a game, in a chat, etc.), an IRC channel name status of each table (during the game, empty, recruiting, etc.), and an update history counter for sharing the player table information between a CP and a RM.
POLBES: A server for management of a database DB storing items put up for auction, and located in the lobby server 2.

As shown in FIG. 6, the lobby navigator LN periodically writes the zone list ZL and the room list RL to the POLPRO (steps L1 and L2). The room master RM writes the player table list PTL in the room to the POLPRO (step R1).

The user terminal CP reads the player save data SD of the player and the zone list ZL from the POLPRO (steps C1 and C2), and displays the zone list ZL on the screen (step C3) until a zone list ZL has been selected. It is determined from the zone list ZL displayed on the screen whether any zone has been selected (step C4). If a zone has been selected, the room list RL of the selected zone is read (step C5) and displayed on the screen (step C6). Then, it is determined whether any room has been selected from the room list RL displayed on the screen (step C7).

If a room has been selected, it is joined to the IRC channel of the selected room (step C8). Then, the player table list PTL is read from the POLPRO (step C9), and self-introduction information is transmitted based on the player save data SD, etc. (step C10).

When a player to play with is searched for by chatting, etc. (step C11), then the player table information in the room is updated (step C12). Furthermore, it is determined whether the player has performed an operation of exiting the room (step C13). If the operation of exiting the room has been performed, then the player exits the room (step C14). If the operation has not been performed, it is determined whether any table belonging to the room has been selected (step C15). If any table has not been selected, the process from step C11 is performed.

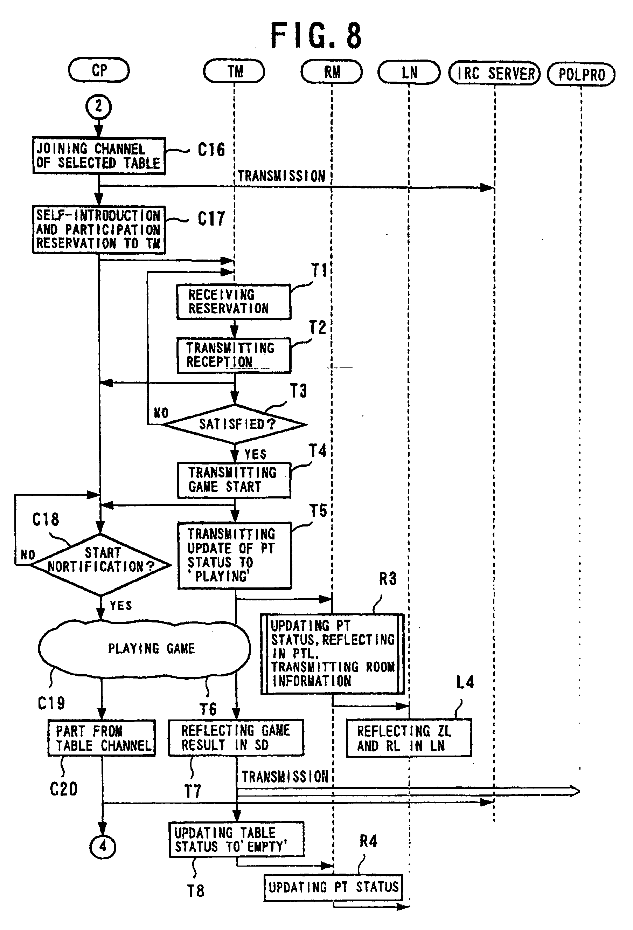

If any table has been selected, then it is joined to the IRC channel of the selected table as shown in FIG. 8 (step C16). Then, the self-introduction of the player is transmitted to the table master TM, and a participation reservation request is transmitted (step C17).

Then, a game start notification is awaited (step C18), and when it is received, a game process is performed to start and then proceed with the game (step C19). When the player stops the game through the user terminal CP, it exits the table, that is, it parts from the IRC channel of the table (step C20).

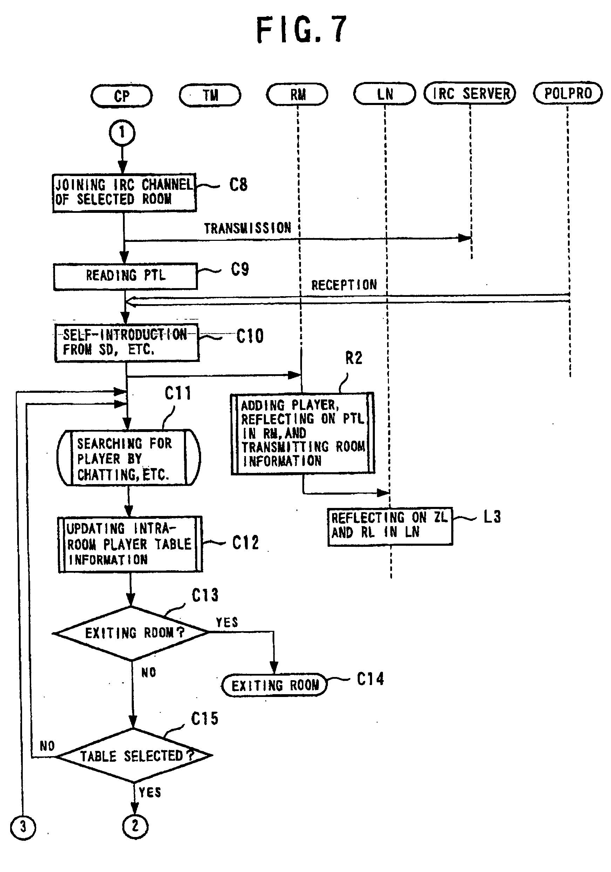

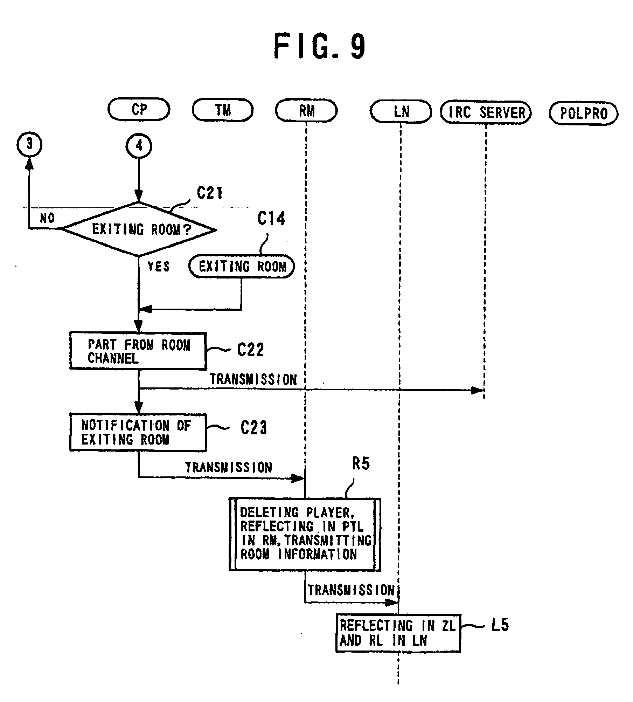

Furthermore, as shown in FIG. 9, it is determined whether an operation of exiting the room has been performed (step C21). When the operation of exiting the room is performed, and when the player exits the room in step C14 (FIG. 7) as described above, it exits the room channel, and issues an exit notification (step C23).

From the room master's perspective, as shown in FIG. 7, when the room master RM receives the self-introduction information from the user terminal CP, it adds the player who transmits the self-introduction information, and transmits the room information with the addition reflected on the player table list PTL in the room master RM to the lobby navigator LN (step R2).

Then, the player table list PTL reflecting the addition of the player is periodically written to the POLPRO in the process in step R1 (FIG. 6). When the lobby navigator LN receives the player table list PTL reflecting the addition of the player, it is reflected on the zone list ZL and the room list RL in the lobby navigator LN (step L3). The zone list ZL and the room list RL reflecting the player table list PTL are written to the POLPRO in the process in steps L1 and L2 (FIG. 6).

As shown in FIG. 8, when the table master TM receives the participation reservation information from the user terminal CP in step C17, it performs a reservation receipt process of the player (step T1), and the receipt information is transmitted to the user terminal CP (step T2). Then, it is determined whether there is the necessary number of players in a game played in the table (step T3).

That is, if the game to be played on the table is 'mah-jongg' then four players are required to start this game. Therefore, in this case, it is determined in step T3 whether four players have joined. If the necessary number of players to start the game has not joined (NO in step T3), then the process from step T1 is performed. If the necessary number of players to start the game has joined (YES in step T3), then a game start notification is transmitted to the user terminal CP (step T4).

Then, the PT (player table) status is updated to 'playing', and is transmitted to the room master RM (step T5). As discussed with respect to step C19, the game process starts and the game proceeds (step T6).

For example, in a game using the save data SD, the save data SD copied to the user terminal CP can be used, and the save data SD can be copied from the POLPRO when the game is started. When the players stop the game, the game result is transmitted to the POLPRO to have the game result reflected in the player save data SD of the corresponding player (step T7), and the POLPRO reflects the game result in the player save data SD of the corresponding player. Then, a command to update the table state to 'empty' is transmitted (step T8).

As shown in FIG. 8, when the update of the PT status to 'playing' is transmitted from the table master TM in the process in step T5, the room master RM updates the PT status, and transmits the room information reflecting it in the player table list PTL in the room master RM to the lobby navigator LN (step R3), thereby updating the PT status (step R4). The reflecting player table list PTL is periodically written to the POLPRO in the process in step R1 (FIG.6).

When the player table list PTL reflecting the addition of the player is transmitted, the lobby navigator LN has the player table list PTL reflected in the zone list ZL and the room list RL in the lobby navigator LN (step L5). The zone list ZL and the room list RL reflected on the player table list PTL are written to the POLPRO in the process in steps L1 and L2 (FIG. 6).

Furthermore, as shown in FIG.9, upon receipt of a notification of exiting the room from the user terminal CP in the process in step C23, the room master RM deletes the player who exited the room, and transmits the room information having the player table list PTL in the room master RM to the lobby navigator LN (step R5). The player table list PTL reflecting the addition of the player is periodically written to the POLPRO in the process in step R1 (FIG.6).

When the player table list PTL reflecting the deletion of the player is transmitted, the lobby navigator LN has the player table list PTL updated in the zone list ZL and the room list RL in the lobby navigator LN (step L4). The zone list ZL and the room list RL reflected in the player table list PTL are written to the POLPRO in the process in steps L1 and L2 (FIG. 6).

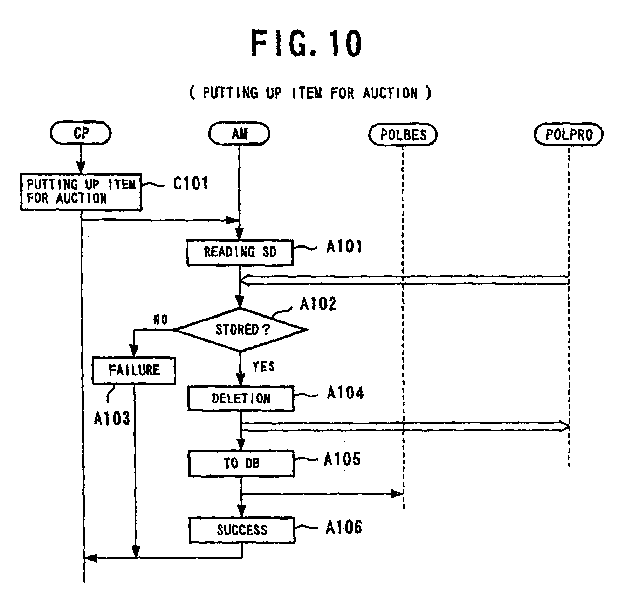

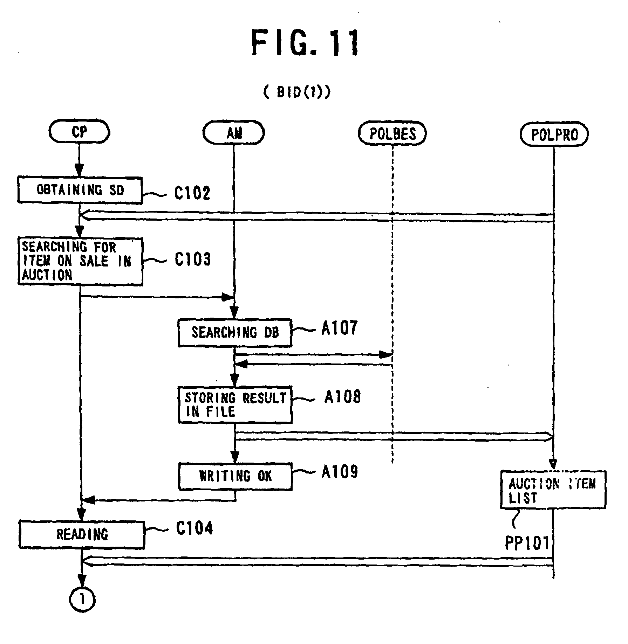

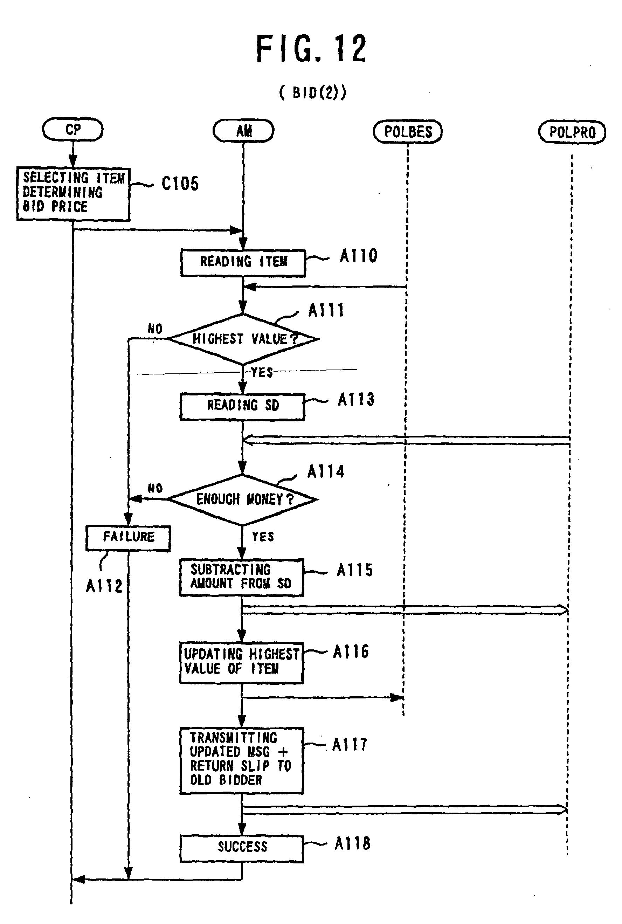

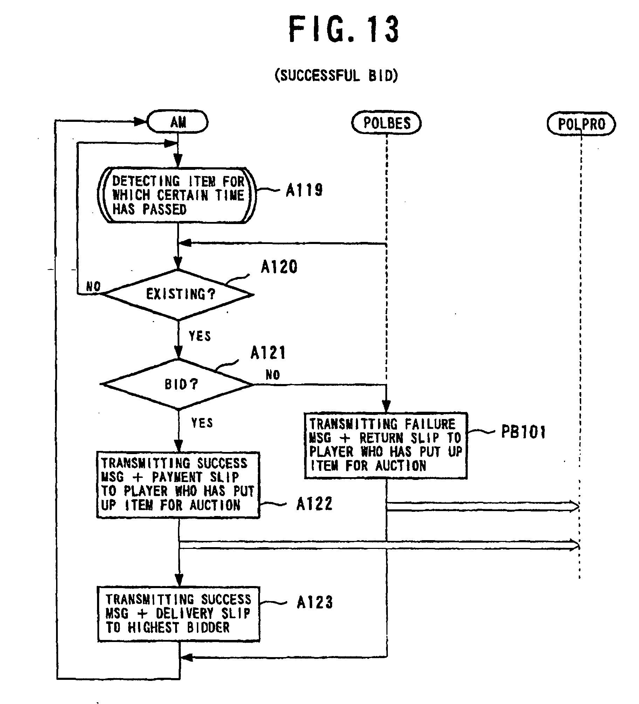

FIGS. 10 to 13 are flowcharts of the operations in an auction in which items in the player save data SD stored in the POLPRO for each player are sold and bought. FIG.10 shows the operations performed when an item is put up for auction. FIGS.11 and 12 show the operations performed when a bid is made. FIG.13 shows the operation performed when a bid is successfully made.

That is, as shown in FIG. 10, when the user terminal CP transmits an instruction to put up a desired item for auction (step C101), an auction master AM reads the player save data SD of the player corresponding to the user terminal CP of the POLPRO (step A101). Then, it is determined whether the player has an item specified by the auction instruction, that is, whether the item specified by the auction instruction is stored in the player save data SD of the player (step A102). Thus, it is appropriately determined whether the save data has been changed in the user terminal CP.

As a result of the determination in step A101, if the specified item to be auctioned is not stored in the player save data SD of the player (NO in step A102), it is impossible to put up the item for auction. Therefore, a failure notification stating that the item cannot be put up for auction is transmitted to the user terminal CP (step A103).

If the specified item to be put up for auction is stored in the player save data SD of the player (YES in step A102), then it is possible to auction the item. Therefore, the item specified for auction is deleted from the player save data SD of the player of the POLPRO (step A104). The process up to step A104 is performed when the save data copied from the POLPRO is not being used in a game, for example, in the period from the termination of a game in which the save data is used to the restart of the game, that is, before starting the game. Then, the item specified for auction is stored in the database DB by the POLBES (step A105), and a "success" notification that the item can be successfully put up for auction is transmitted to the user terminal CP (step A106).

As shown in FIG. 11, the user terminal CP of the player intending to bid in an auction obtains his or her own player save data SD stored in the POLPRO (step C102). The player confirms the item and the amount of the money owned by the user according to the player save data SD obtained and displayed on the screen. When an instruction is given to search for an item on sale in auction (step C103), the auction master AM searches the auction item list in the database DB (step A107), files the search result (step A108), and the POLPRO stores the auction item list formed by the file (step PP101). The auction master AM transmits a write OK to the user terminal CP (step A109), and the user terminal CP receives it and reads the auction item list stored in the POLPRO (step C104). Thus, the auction item list is displayed on the screen of the user terminal CP.

As shown in FIG. 12, when an item to be purchased is selected from the auction item list on the screen of the user terminal CP, and the bid price to be paid for the item is determined (step C105), the auction master AM reads the bid price of the currently highest bidder (old bid price) stored in POLBES in advance as described later in step A116 (step A110). After comparing the read old bid price with the new bid price, it is determined whether the new bid price is the highest bid price (step A111).

If the new bid price is not the highest bid price (NO in step A111), then a "failure" notification that the bid has not been successfully made is transmitted to the user terminal CP (step A112). If it is the highest bid price, then the player save data SD of the player of the user terminal CP is read from the POLPRO (step A113), and it is determined whether there is enough money to pay the new bid price (step A114). If there is not enough money to pay the new bid price (NO in step A114), then the bid cannot be successfully made, and a "failure" notification stating that the bid has not been successfully made is transmitted to the user terminal CP (step A112).

If there is enough money to pay the new bid price (YES in step A114), then the amount of money corresponding to the bid price is subtracted from-the player save data SD of the player in the POLPRO (step A115). The process up to step A115 is performed when the save data copied from the POLPRO is not being used in a game, for example, in the period from the termination of a game in which the save data SD is used to the restart of the game, that is, before starting the game. Then, the highest bid price for the item in the POLBES is updated (step A116). Furthermore, an MSG (message) for notification of the update of the highest bid price to be transmitted to the old bidders, and the return slip information for return of money subtracted in step A115 to be returned are transmitted to the POLPRO (step A117). Thus, the MSG (message) is received by the user terminal CP. The POLPRO stores the return slip information as associated with the player save data SD of the player. At a predetermined time, the amount of money indicated by the return slip information is returned to the save data SD of the POLPRO, and the information is updated. The predetermined time can be a period in which the contents of the save data copied from the POLPRO is not being changed, or the period in which the save data is requested. Then, the success notification is transmitted to the user terminal CP of the player presenting the highest bid price (step A118).

As shown in FIG. 13, the auction master AM periodically retrieves an item for which a predetermined auction time has passed in the auction item list of the POLBES (step A119). Based on the retrieval result, it is determined whether there is an item for which a predetermined auction time has passed (step A120). If yes (YES in step A120), then it is determined whether a bid has been made for the item for which the predetermined auction time has passed (step A121).

If no bid has been made for an item for which the predetermined auction time has passed (if the process according to the flowchart described by referring to FIG. 12 has not been performed), then the POLBES issues an MSG (message) that the auction unsuccessfully terminates to the player who has put up the item for auction, and transmits the return slip information about returning the item put up for auction to the owner of the item to the POLPRO (step PB101). Thus, the MSG (message) is sent to the user terminal CP. The POLPRO stores the return slip information as associated with the player save data SD of the player who has put up the item for auction. At a predetermined time, the item indicated by the return slip information is returned to the player save data SD of the POLPRO, and the information is updated. A predetermined time can be a period in which the contents of the save data copied from the POLPRO is not being changed, or the period in which the save data is requested. If there is not an item for which a predetermined auction time has passed, the process from step A119 is performed.

When a bid is made (YES in step A121), an MSG (message) notifying of: the success of the auction, the player who has put up the item bidded for, and the payment slip information for payment of the amount corresponding to the successful bid amount in the auction are transmitted to the POLPRO (step A122). Thus, the MSG (message) is sent to the user terminal CP. The POLPRO stores the payment slip information as associated with the player save data SD of the player who has auction the item. At a predetermined time, the amount of money indicated by the return slip information is added to the player save data SD of the POLPRO, and the information is updated. A predetermined time can be a period when a game in which the contents of the save data copied from the POLPRO is not being changed, or a period in which the save data is requested.

Furthermore, an MSG (message) for notification to the highest bidder (successful bidder) for the item, and the delivery slip information for delivery of the item to the successful bidder are transmitted to the POLPRO (step A123). Thus, the POLPRO adds the item indicated by the delivery slip information to the player save data SD and the information is updated, and the MSG (message) is sent to the user terminal CP of the successful bidder.

According to the above mentioned embodiment, when the operations of delivery, payment, repayment, and return are conducted, an item stored as save data can be sold to another player, or purchased from another buyer, thereby establishing a reasonable system. Thus, players can obtain an item available from the players' characters in the game, for example, through a route other than the game. As a result, the strategic development can occur for each player in a game, and an online game in which a number of general players can participate can be more interesting and inviting.

According to the above mentioned embodiment of the present invention, an item used in a game can be easily and properly dealt.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

## Claims

1. A server system connected to a plurality of client systems operated by players through a network controls a game including players operating respective client systems, and performs an auction in which the players auction an item used in the game, selling the item using money in the game, comprising:
a storage that stores save data indicating the item and an amount of money owned in the game by each player;
a reception system that receives, from a selected player, an instruction to auction the item or a bid in the auction;
a data deletion system that deletes data corresponding to the item put up for auction or a price for bidding in the auction from the save data of the selected player based on information received by the reception system;
a determination system that determines an auction result of the auction item; and
a save data update system that updates the save data stored in the storage based on the auction result.

2. The server system according to claim 1, further comprising:
a slip information generation system that generates slip information indicating movement of the money and/or the item to each player participating in the auction based on the auction result, wherein
the save data update system updates the save data of each participating player according to the slip information.

3. The server system according to claim 1, wherein
the save data update system updates the save data while the game is not executing, the game execution changing the contents of the save data.

4. The server system according to any of claims 1, wherein the save data update system updates the save data when the save data is requested.

5. The server system according to claim 1, wherein the reception system receives the instruction to auction the item or the bid in the auction from the player of the client system when copied save data is not used in the game.

6. The server system according to any of claims 1, wherein the item put up for auction includes at least one of arms, magic, medicines, and cards used in the game.

7. An auction processing method for use with a server system connected to a plurality of client systems operated by players through a network, the server system executing a game including the players operating respective client systems, and performing an auction in which the players auction an item used in the game selling the item using money in the game, comprising:
storing save data indicating the item and the amount of money owned in the game by each player;
receiving from a selected player an instruction to auction the item or a bid in the auction;
deleting data corresponding to the item put up for auction or a price for bidding in the auction from the save data of the selected player based on the reception;
determining an auction result of the item put up for auction; and
updating the stored save data based on the auction result.

8. The auction processing method according to claim 7, further comprising
generating slip information indicating movement of the money and/or the item to the players participating in the auction based on the auction result, wherein
the save data updating further comprises updating the save data of each participating player according to the slip information.

9. A storage medium on which is recorded an auction processing program for causing a computer to perform a game including the players operating respective client systems connected through a network, and to perform an auction in which the player auction an item used in the game selling the item using money in the game, the program causing the computer to execute:
storing save data indicating the item and the amount of money owned in the game by each player;
receiving from a selected player an instruction to auction the item or a bid in the auction;
deleting data corresponding to the item put up for auction or a price for bidding in the auction from the save data of the selected player based on the reception;
determining an auction result of the item put up for auction; and
updating the save data based on the auction result.
